# EUROPÄISCHE PATENTSCHRIFT

(11) **EP 3 887 017 B1**
(45) Veröffentlichungstag und Bekanntmachung des Hinweises auf die Patenterteilung: **31.07.2024**
(21) Anmeldenummer: 19805255.7
(22) Anmeldetag: 14.11.2019
(51) Int. Cl.: B01D 29/96, B01D 35/30

(54) **FILTERVORRICHTUNG ZUR TRINKWASSERFILTERUNG**
FILTER DEVICE FOR FILTERING DRINKING WATER
DISPOSITIF DE FILTRATION D'EAU POTABLE

(30) Priorität: 26.11.2018 DE 102018129752
(43) Veröffentlichungstag der Anmeldung: 06.10.2021
(73) Patentinhaber: KWC Group AG, 5726 Unterkulm (CH)
(72) Erfinder: KEEL, Manuel, 5103 Wildegg (CH); LEUTWILER, Markus, 5612 Villmergen (CH)
(74) Vertreter: Witte, Weller & Partner Patentanwälte mbB
(86) Internationale Anmeldenummer: PCT/EP2019/081366
(87) Internationale Veröffentlichungsnummer: WO 2020/109024

(56) Entgegenhaltungen:
- WO-A1-2005/077490
- US-A1- 2006 254 971
- US-A1- 2011 220 559
- US-A1- 2013 240 431
- US-A1- 2016 136 547
- US-A1- 2018 104 627

## Beschreibung

Die vorliegende Erfindung betrifft eine Filtervorrichtung zur Filterung von Trinkwasser.

Filtervorrichtungen finden Ihre Anwendung insbesondere in Haushalten zur Aufbereitung und Filterung von Wasser, welches beispielsweise zum Kochen, Waschen oder zum Trinken genutzt wird. Filtervorrichtungen können dabei zentral angeordnet sein, beispielsweise direkt nach dem Hauswasseranschluss, aber auch alternativ oder zusätzlich dezentral vor einer Wasserentnahmestelle, beispielsweise an einer Spüle oder Waschmaschine. Zur Filterung des Trinkwassers ist in der Filtervorrichtung meist eine Filterkartusche angebracht, in welcher das durchlaufende Wasser mittels eines oder mehrerer Filtermedien gereinigt wird. Beispielsweise in Regionen mit kalkhaltigem Wasser kann eine Filterung und Reduzierung des Kalkgehaltes von Vorteil sein um Kalkablagerungen an Spülen, Kochutensilien oder Küchengeräten zu reduzieren oder vollständig zu vermeiden.

Von Zeit zu Zeit ist es notwendig, die Filterkartusche auszutauschen und durch eine neue zu ersetzen. Dies kann zum einen aus hygienischen Gründen sein sowie andererseits auch aus Effizienzgründen in der Filterung, da das Filtermedium mit der Zeit aufgebracht oder zugesetzt sein kann. Zum Wechseln der Filterkartusche müssen die Zu- und Rückleitungen abgesperrt werden, um ein Auslaufen von Wasser zu verhindern. Dies kann durch Absperrventile erfolgen, welche manuell zu betätigen sind und die Wasserzufuhr zur Filtervorrichtung verschließen. Nach dem Schließen der Wasserzufuhr kann die Filterkartusche aus der Filtervorrichtung entnommen werden und durch eine neue Filterkartusche ersetzt werden. Anschließend muss das Absperrventil wieder geöffnet werden.

Die US 2006/254971 A1 offenbart eine Filtervorrichtung zur Aufbereitung von Trinkwasser mit einem Ventilgehäuse, an welchem eine Gehäuseauslassöffnung angeordnet ist, und einem Ventilkörper, welcher innerhalb des Ventilgehäuse drehbar gelagert und zur Aufnahme eines Einlass-/Auslassabschnittes einer Filterpatrone mit einer Patroneneinlassöffnung und einer Patronenauslassöffnung ausgebildet ist. In einer ersten Drehposition der Vorrichtung stehen sowohl die Auslassöffnungen als auch die Einlassöffnungen der Filterpatrone sowie des Gehäuses in fluidischer Verbindung, wohingegen in einer zweiten Drehposition, in welcher die Filterpatrone gewechselt werden kann, die Auslassöffnungen und die Einlassöffnungen von Filterpatrone und Gehäuse nicht in fluidischer Verbindung stehen.

Die WO 2005/077490 A1 zeigt eine Filtervorrichtung, bei der eine Filterkartusche auf entsprechende Anschlüsse an der Filtervorrichtung aufgesteckt und dann durch eine schwenkbare Kappe verriegelt wird. Durch die Schwenkbewegung der Kappe wird gleichzeitig ein Ventil in der Zuleitung geöffnet bzw. geschlossen.

In der EP 2 366 442 A1 ist beschrieben, dass eine Filterkartusche auf entsprechende Anschlüsse an der Filtervorrichtung aufgesetzt und durch eine Schwenkbewegung arretiert wird. Ein Rückschlagventil soll verhindern, dass Wasser bei entnommener Filterkartusche auslaufen kann. Wie das Rückschlagventil nach dem Einsetzen einer neuen Filterkartusche jedoch wieder geöffnet werden soll, ist nicht beschrieben.

Die US 2016/0136547 A1 beschreibt eine in einen Kühlschrank integrierte Filtervorrichtung, bei der die Filterkartusche unter einem schrägen Winkel in eine Aufnahme in einem drehbaren Zylinder eingesteckt und dann durch eine Schwenkbewegung arretiert wird. Ein mechanisches Geräusch zeigt an, wenn die Filterkartusche die Entnahmeposition erreicht. Wie die Zu- und Rückleitungen abgesperrt werden, ist nicht beschrieben.

Insbesondere bei einer dezentralen Anordnung der Filtervorrichtung vor einer Wasserentnahmestelle gestaltet sich ein Wechsel der Filterkartusche auch auf Grund von eingeschränkten Platzverhältnissen beispielsweise in Unterschränken oder ähnlichem schwierig, da die Filtervorrichtung auch aus ästhetischen Gründen nicht frei zugänglich und für jeden sichtbar angebracht werden. Nachteilig ist hierbei auch, dass für das Betätigen von Absperrventilen, welche in oder hinter beispielsweise Küchenschränken liegen, diese um- oder ausgeräumt werden müssen. Zudem ist nach dem Absperrventil ein kleinerer Leitungsabschnitt, in welchem immer noch ein entsprechender Wasserdruck herrscht, noch mit Wasser gefüllt, so dass dieses Wasser beim Auswechseln der Filterkartusche aus der Filtervorrichtung entweichen kann und die umliegenden Flächen mit Wasser benetzt.

Es ist daher Aufgabe der Erfindung eine Filtervorrichtung anzugeben, welche die bestehenden Nachteile im Stand der Technik überwindet.

Es ist eine weitere Aufgabe der Erfindung eine Filtervorrichtung anzugeben, welche ein einfaches und sicheres Wechseln einer Filterkartusche ermöglicht. Diese und weitere Aufgaben werden durch eine Filtervorrichtung nach dem Anspruch 1 gelöst. Bevorzugte Ausgestaltungsformen der Filtervorrichtung finden sich in den Ansprüchen 2 bis 15.

Erfindungsgemäß umfasst die Filtervorrichtung zur Trinkwasserfilterung eine Anschlussvorrichtung, an der ein Aufnahmeteil zum Anschluss einer Filterkartusche schwenkbar gelagert ist. Das Aufnahmeteil weist eine zumindest abschnittsweise rotationssymmetrisch geformte Wandung auf, welche eine konvexe Gleitfläche bildet, an der zu einem in dem Aufnahmeteil ausgebildeten Filteranschluss führende Zulauf- und Rücklaufkanäle für das zu filternde Trinkwasser münden, wobei die Wandung gegen eine zumindest abschnittsweise zu dieser koaxial gekrümmten Innenwand der Anschlussvorrichtung dichtend anliegt und an der Innenwand Anschlussöffnungen für einen Zulauf und Rücklauf des zu filternden Trinkwassers münden, und wobei das Aufnahmeteil in eine Arbeitsposition, in welcher die Mündungen der Zulauf- und Rücklaufkanäle dichtend über den zugehörigen Anschlussöffnungen in der Innenwand der Anschlussvorrichtung liegen, schwenkbar ist sowie in eine Wechselposition, in welcher die Filterkartusche von dem Aufnahmeteil abnehmbar bzw. in eine Anschlussöffnung des Filteranschlusses im Aufnahmeteil einführbar ist und die Wandung des Aufnahmeteils zumindest die Anschlussöffnung für den Zulauf des zu filternden Trinkwasser dichtend verschließt.

Die Innenwand der Anschlussvorrichtung und die Wandung des Aufnahmeteils sind somit im Bereich der von der Wandung gebildeten Dichtfläche kreisbogenförmig um die Schwenkachse als Mittelachse ausgebildet, so dass bei einer Drehbewegung des Aufnahmeteils gegenüber der Innenwand der Anschlussvorrichtung die korrespondierenden Flächen übereinander laufen und - gegebenenfalls unter Verwendung einer zusätzlichen Dichtung - gegeneinander abdichten. Durch die Schwenkbewegung wird zumindest der Zulauf abgesperrt, so dass beim Entfernen der Filterkartusche kein Wasser aus der unter Druck stehenden Zuleitung austreten kann. Vorzugsweise werden beide Anschlussöffnungen für den Zulauf und den Rücklauf in der Wechselposition von dem Aufnahmeteil verschlossen.

Durch die erfindungsgemäße Filtervorrichtung kann eine Filterkartusche auf einfach Weise gewechselt werden ohne die Wasserzuleitung über ein manuell zu betätigendes Absperrventil zu unterbrechen, da die Wandung den Zulauf und Ablauf des zu filternden Trinkwassers sperrt. Das Verschließen der Anschlussöffnungen für den Zulauf und den Ablauf des zu filternden Trinkwassers über die Wandung des Aufnahmeteils ermöglicht es die Anschlussöffnungen an einer fixen Position in der Filtervorrichtung anzuordnen. Die Anzahl von beweglichen Elementen und insbesondere mit-beweglichen Elementen wie flexible Schläuche wird somit deutlich reduziert. Zudem kann die Filtervorrichtung kompakt ausgeführt werden, da keine weiteren Elemente zur Sperrung der Zu- und Abläufe benötigt werden und sowohl der Zulauf als auch der Ablauf des Trinkwassers werden mit der Schwenkbewegung abgedichtet.

In einer bevorzugten Ausführungsform führt die Filterkartusche bei einer Schwenkbewegung des Aufnahmeteils von der Wechselposition in die Arbeitsposition eine Bewegung in Einführrichtung in die Filteraufnahme im Aufnahmeteil hinein aus. Die Filterkartusche wird durch diese bezüglich der Längsachse der Filterkartusche axiale, bezüglich der Schwenkachse radiale Bewegung in das Aufnahmeteil hinein am Filteranschluss abgedichtet.

Vorzugsweise ist an der Anschlussvorrichtung seitlich von dem Aufnahmeteil zumindest eine Führungsbahn derart ausgebildet, dass ein an der Filterkartusche angeordnetes Führungselement bei der Bewegung des Aufnahmeteils von der Wechselposition in die Arbeitsposition in die Führungsbahn eingreift. Hierdurch wird ein unbeabsichtigtes Verschieben der Filterkartusche in der Anschlussvorrichtung verhindert. Zudem wird die Filterkartusche, sobald die Führungselemente in die Führungsbahn eingegriffen haben in Ihrer Position gestützt und kann nicht mehr aus der Filtervorrichtung unbeabsichtigt herausfallen.

Die Führungsbahn ist vorzugsweise derart ausgestaltet, dass die Filterkartusche bei einer Schwenkbewegung des Aufnahmeteils von der Wechselposition in die Arbeitsposition eine Einzugsbewegung in das Aufnahmeteil hinein ausführt. Die Filterkartusche wird somit am Filteranschluss des Aufnahmeteils fixiert und abgedichtet. Zudem kann die Filterkartusche in den Filteranschluss nur aufgesetzt werden und wird durch die Einzugsbewegung über die Führungsbahn am Filteranschluss fixiert.

In einer bevorzugten Ausführungsform ist beiderseits des Aufnahmeteils jeweils eine Führungsbahn in der Anschlussvorrichtung ausgebildet ist. Die Filterkartusche wird so beidseitig beim Verschwenken von der Wechselposition in die Arbeitsposition unterstützt und ein Verkanten dieser kann vermieden werden.

Bei einer weiteren bevorzugten Ausführungsform besitzt die Führungsbahn im Bereich einer Endlage eine Vertiefung, in welcher das Führungselement in der Endlage einrastet. Die Filterkartusche ist dann in ihrer Endposition, d.h. der Arbeitsposition, gegen Herausrutschen bzw. Öffnen gesichert.

Vorzugsweise umfasst das Aufnahmeteil zumindest eine Führungsschiene, welche die Filterkartusche beim Entnehmen und Einführen in Einführrichtung unterstützt. Die Filterkartusche kann an die Führungsschiene angelegt werden und entlang dieser in die Filteraufnahme des Aufnahmeteils eingeschoben werden. Optional kann die Führungsschiene auch abnehmbar ausgestaltet sein. Zur Verwendung unterschiedlicher Filterkartuschen kann die Führungsschiene dann abgenommen und durch eine, entsprechend der Kontur der Filterkartusche ausgebildete weitere Führungsschiene ersetzt werden.

In einer weiter bevorzugten Ausführungsform ist die Wandung als eine Zylinderfläche oder Kugelfläche ausgebildet. Daneben kommt auch jede andere rotationssymmetrische Form in Betracht - beispielsweise eine Fass- oder Hantelform.

Alternativ oder in Kombination ist an der Anschlussvorrichtung zumindest ein Verriegelungselement angeordnet, welches in der Wechselposition eine Schwenkbewegung des Aufnahmeteils blockiert und welches durch zumindest ein Eingreifelement an der Filterkartusche beim Einsetzen der Filterkartusche lösbar ist. Durch das zumindest eine Verriegelungselement wird eine Bewegung des Aufnahmeteils ohne Filterkartusche, wodurch die Anschlussöffnungen fluidisch verbunden werden und die Zuleitung somit unbeabsichtigt geöffnet wird, verhindert. Auch wird hierdurch sichergestellt, dass stets eine Filterkartusche zum Reinigen des Trinkwassers eingesetzt ist.

Vorzugsweise ist beiderseits des Aufnahmeteils zumindest ein Verriegelungselement an der Anschlussvorrichtung oder dem Aufnahmeteil angeordnet. Hierdurch wird ein einseitiges Verdrehen des Aufnahmeteils unterbunden und gleichzeitig die Sicherheit erhöht, da zumindest zwei Verriegelungselemente zu lösen sind.

In einer weiteren bevorzugten Ausführungsform sind die Verriegelungselemente in der Höhe und/oder Tiefe versetzt zueinander angeordnet oder unterschiedlich in Ihrer Form ausgebildet. Die Anordnung von und zudem zueinander versetzten Verriegelungselementen erhöht die Sicherheit, so dass ein unbeabsichtigt Verschwenken des Aufnahmeteils verhindert wird.

Alternativ oder in Kombination ist das Aufnahmeteil von der Arbeitsposition in die Wechselposition um einen Winkel kleiner 90°, vorzugsweise um einen Winkel zwischen 30° und 60°, besonders bevorzugt zwischen 45° und 60°, schwenkbar. Die Filterkartusche kann hierdurch einfach und handlich ohne großen Kraftaufwand gewechselt werden.

Vorzugsweise ist an der Innenwand um die Anschlussöffnungen herum zumindest eine erste Dichtung angeordnet, welche die Anschlussöffnungen gegenüber der Wandung abdichtet. Insbesondere die Anschlussöffnung für die Zuleitung des Trinkwassers zu der Filtervorrichtung wird sicher abgedichtet. Der Fluss des Trinkwassers über die Filtervorrichtung wird somit tropfsicher unterbrochen.

Eine weitere bevorzugte Ausführungsform der Filtervorrichtung zeichnet aus, dass an der Innenwand zumindest eine zweite Dichtung angeordnet ist, welche bei der Schwenkbewegung des Aufnahmeteils außerhalb der Arbeitsposition die Mündungen des Zulauf- und Rücklaufkanals gegenüber der Innenwand abdichtet. Durch die Abdichtung der Mündungen des Zulauf- und Rücklaufkanals wird verhindert, dass darin noch enthaltenes Trinkwasser beim Wechseln der Filterkartusche aus diesen heraustropfen kann. Die zweite Dichtung kann dabei insbesondere auch einstückig mit der ersten Dichtung integriert sein, zu einer sogenannten Zweikammerdichtung.

Vorzugsweise ist an der Filterkartusche zumindest ein Sicherungselement zur Sicherung der Filterkartusche in der Arbeitsposition angeordnet ist. Insbesondere unterbindet das Sicherungselement ein Verdrehen der Filterkartusche um deren Längsachse. Die Filterkartusche kann somit in der Arbeitsposition nicht gedreht werden und hat einen festen Sitz in der Filtervorrichtung. Dies ist vorteilhaft, da mit der Handhabung nicht betraute Benutzer versuchen könnten, die Filterkartusche durch Drehen zu lösen. Eine solche Fehlbedienung, die zu einer Beschädigung oder einem Aufschrauben der Filterkartusche selbst führen könnte, wird durch eine Verdrehsicherung verhindert. Vor allem bei der Verwendung von Filterkartuschen, bei welchen das Filtermedium wechselbar ist, wird über das Sicherungselement gewährleistet, dass das Gehäuse der Filterkartusche in der Arbeitsposition nicht geöffnet werden kann. Die Sicherungselemente können bevorzugt als Noppen, längliche Besätze und/oder Streifen ausgebildet sein.

Weitere Vorteile und Eigenschaften der vorliegenden Erfindung werden nachfolgend anhand von Zeichnungen und einem Ausführungsbeispiel erläutert.

Dabei zeigen:
- Figur 1: eine erfindungsgemäße Filtervorrichtung mit einer eingesetzten Filterkartusche in der Arbeitsposition in einer Seitenansicht;
- Figur 2: eine Seitenansicht auf eine erfindungsgemäße Filtervorrichtung in der Wechselposition;
- Figur 3: eine isometrische Ansicht der Anschlussvorrichtung ohne deren schwenkbares Anschlussteil;
- Figur 4: eine Draufsicht auf die Anschlussvorrichtung aus Figur 3;
- Figur 5: einen Schnitt durch die Filtervorrichtung in der Arbeitsposition;
- Figur 6: einen Schnitt durch die Filtervorrichtung in der Wechselposition;
- Figur 7: einen Schnitt durch die Filtervorrichtung in der Arbeitsposition entlang deren Mittelachse
- Figur 8: einen Schnitt durch die Filtervorrichtung in der Wechselposition entlang deren Mittelachse;
- Figur 9: eine Seitenansicht der Filtervorrichtung beim Einsetzen der Filterkartusche und
- Figur 10: eine isometrische Ansicht des Kopfbereichs einer Filterkartusche.

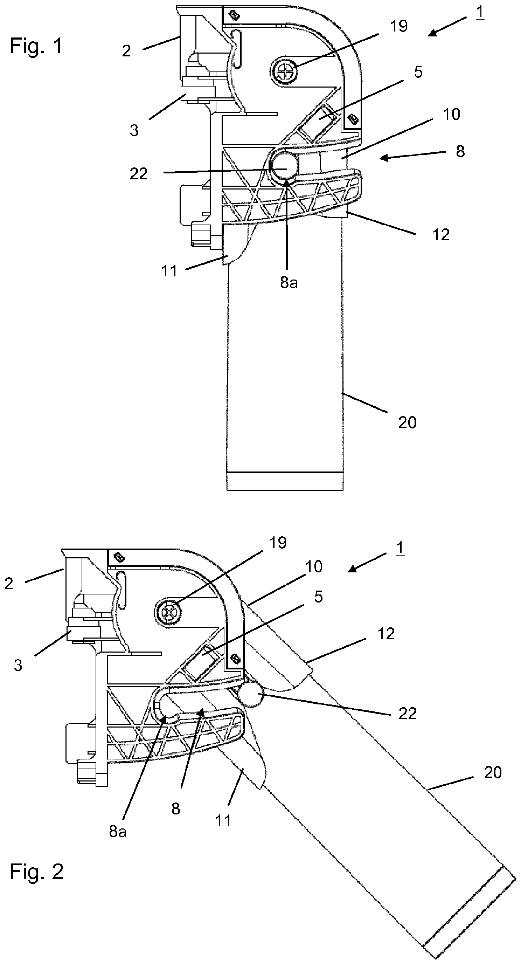

In Figur 1 ist eine Filtervorrichtung 1 zur Filterung von Trinkwasser in der Arbeitsposition A dargestellt, in welcher in der Filtervorrichtung 1 ein Filterkartusche 20 eingesetzt ist. Die Filtervorrichtung 1 umfasst eine Anschlussvorrichtung 2, an welche die Anschlüsse 3 für die Zuleitung und Ableitung des Trinkwassers münden. Die Anschlüsse 3 sind ortsfest und führen über Kanäle zu Anschlussöffnungen 4 an der Innenwand 9 der Anschlussvorrichtung 2. An der Anschlussvorrichtung 2 ist weiterhin eine Aufnahmeteil 10 angeordnet, welches um eine Schwenkachse 19 von der Arbeitsposition A in die Wechselposition B geschwenkt werden kann. Das Aufnahmeteil 10 dient zur Aufnahme einer Filterkartusche 20, in welcher das Trinkwasser gefiltert wird. Bei der Filterkartusche 20 kann es sich beispielsweise um einen Kalk-Filter zur Entkalkung des Trinkwassers handeln. Aber auch andere Filter wie Reinigungsfilter wie Aktivkohlefilter, Vliesfilter, Membranfilter oder dergleichen können in die Filtervorrichtung 1 eingesetzt werden. Das Aufnahmeteil 10 umfasst eine untere Führungsschiene 11, welche zur Führung der Filterkartusche 20 beim Einsetzen in die Filtervorrichtung 1 dient und ein leichtes Handling beim Wechseln der Filterkartusche 20 ermöglicht. Neben der unteren Führungsschiene 11 kann auch eine obere Führungsschiene 12 an dem Aufnahmeteil 10 angeordnet sein, welche die Handhabung weiter verbessert. An der Filterkartusche 20 ist beiderseits seitlich ein Führungselement 22 in Form eines Zapfens angebracht, welcher in eine Führungsbahn 8 der Anschlussvorrichtung 2 eingreifen kann. In der Arbeitsposition A wird die Filterkartusche 20 über das Führungselement 8 in der Führungsbahn gestützt und verhindert ein Herausfallen der Filterkartusche 20 aus dem Aufnahmeteil 10 während des Betriebs.

Am Ende der Führungsbahn 8 rastet das Führungselement 22 in seiner Endposition in eine Art Auge 8a ein. Hierbei handelt es sich um eine als Arretierungshilfe dienende Vertiefung 8a in der Führungsbahn 8, in der das Führungselement 22 in der Endposition einrastet. Die Filterkartusche 20 ist dann in ihrer Endposition, d.h. der Arbeitsposition, gegen Herausrutschen bzw. Öffnen gesichert. Zum Öffnen muss die Filterkartusche zunächst leicht angehoben werden, bevor das Aufnahmeteil 10 in die Wechselposition geschwenkt werden kann. Durch die Vertiefung 8a in der Führungsbahn wird somit eine stabile Endposition erzielt und die Filterkartusche ist gegen ein versehentliches Öffnen z.B. durch Vibrationen gesichert.

Zum Wechseln der Filterkartusche 20 wird die Filtervorrichtung von einer Arbeitsposition A in eine Wechselposition B versetzt, welche in Figur 2 dargestellt ist. Zum Wechseln von der Arbeitsposition A in die Wechselposition B wird das Aufnahmeteil 10 um einen Winkel kleiner 90° verschwenkt, vorzugsweise zwischen 30° und 60° um die Filterkartusche 20 bedienerfreundlich zu entnehmen. In der Wechselposition B greifen die Führungselemente 22 nicht mehr in die Führungsbahn 8 ein, so dass die Filterkartusche 20 leicht aus dem Aufnahmeteil 10 entnommen werden kann und eine neue Filterkartusche 20 eingesetzt werden kann. Über die Führungsschienen 11, 12 wird das sichere Einsetzen und Entnehmen der Filterkartusche 20 gewährleistet. Zudem können die Führungsschienen 11, 12 und noch eine Führung oder Anschlag im Aufnahmeteil 10 für die Filterkartusche 20 bilden, welche mit dem Führungselement 22 zusammenwirkt. Zur Verwendung unterschiedlicher Filterkartuschen 20 können die Führungsschienen 11, 12 auch auswechselbar sein, wobei die Führungsschienen 11, 12 entsprechend der Kontur der Filterkartusche 20 ausgebildet sind.

In der Wechselposition B wird das Aufnahmeteil 10 über Verriegelungselemente 5 wie etwa eine Rastnase an der Anschlussvorrichtung 2 in einer festen Position arretiert. Die Arretierung verhindert ein Verschwenken des Aufnahmeteils 10 in die Arbeitsposition A, in welcher die Anschlussöffnungen 4 wieder freigegeben sind, ohne dass eine Filterkartusche 20 eingesetzt ist. Die Verriegelung des Aufnahmeteils 10 über die Verriegelungselemente 5 wird durch Eingreifelemente 23 an der Filterkartusche 20 beim Einsetzen der Filterkartusche 20 gelöst, etwa indem die betreffende Rastnase zurückgehalten wird und nicht mehr am Aufnahmeteil 10 einrasten kann.

Vorteilhafterweise sind zumindest je ein Verriegelungselement 5 seitlich des Aufnahmeteils 10 angeordnet und die entsprechende Anzahl an Eingreifelementen 23 an der Filterkartusche 20 vorhanden. Durch ein Versetzen der Verriegelungselemente 5 in der Höhe und/oder Tiefe zueinander wird die Sicherheit weiter erhöht. Zudem kann so sichergestellt werden, dass die Filterkartusche 20 richtig eingesetzt ist, da entsprechend der Verriegelungselemente 5 die Eingreifelemente 23 auch unterschiedlich ausgebildet sein müssen. Alternativ können die Verriegelungselemente 5 auch eine unterschiedliche Form besitzen, welche durch entsprechend unterschiedlich ausgestaltete Eingreifelemente 23 gelöst werden.

Nach dem Einsetzen einer neuen Filterkartusche 20 in der Wechselposition B wird das Aufnahmeteil 10 zusammen mit der Filterkartusche 20 verschwenkt um diese in die Arbeitsposition A zu bringen. Bei der Schwenkbewegung greifen die Führungselemente 22 an der Filterkartusche 20 in die Führungsbahn 8 ein. Hierdurch erfährt die Filterkartusche 20 eine Unterstützung und kann nicht aus dem Aufnahmeteil 10 entfallen. Zusätzlich kann über die Führungsbahn 8 die Filterkartusche 20 derart geführt werden, dass diese zusätzlich zur Schwenkbewegung eine axiale Bewegung in das Aufnahmeteil 10 hinein durchführt. Durch diesen "Axialeinzug", also die über die seitliche Führung bewirkte Zwangsbewegung der Filterkartusche 20 in Einführrichtung in ihre Aufnahme hinein, wird diese in das Aufnahmeteil 10 hineingeschoben und eine sichere und insbesondere dichte Verbindung zwischen Aufnahmeteil 10 und Filterkartusche 20 wird erzielt. Bei der Bewegung aus der Arbeitsposition A in die Wechselposition führt die Filterkartusche 20 die entsprechend umgekehrte Bewegung aus und wird aus dem Aufnahmeteil 10 herausgeschoben, so dass diese leichter in der Wechselposition B zu entnehmen ist.

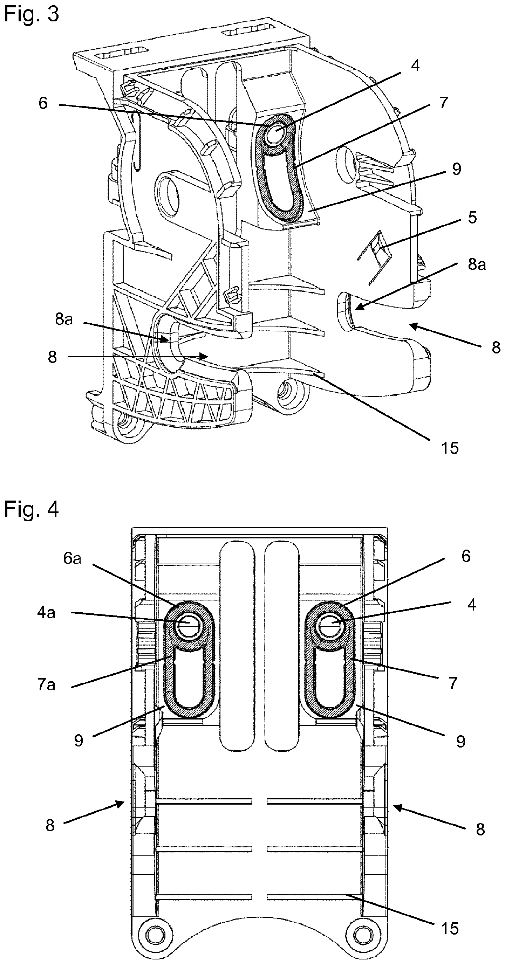

Figuren 3 und 4 zeigen eine detailliertere Darstellung der Anschlussvorrichtung 2. Die Anschlussöffnung 4 ist an der Innenwand 9 der Anschlussvorrichtung 2 angeordnet, welche konkav ausgebildet ist. Die Form der Innenwand 9 um die Anschlussöffnungen 4 verläuft koaxial zur Wandung 13 des Aufnahmeteils 10, welche dichtend an der Innenwand 9 anliegt. Die Innenwand 9 wie auch die Wandung 13 sind zumindest abschnittsweise rotationssymmetrisch, bevorzugt als Zylinder- oder Kugelfläche ausgebildet. Zur Abdichtung der Anschlussöffnungen 4, an welche der Zulauf und Ablauf des zu filternden Trinkwassers mündet, sind die Anschlussöffnungen 4 von einer ersten Dichtung 6 umgeben. In der Innenwand 9 liegt anschließend an die erste Dichtung 6 eine zweite Dichtung 7, welche einen länglicheren Bereich der Innenwand 9 einfasst. Über die zweite Dichtung 7 werden die Mündungen 18 des Zulaufkanals 16 und Rücklaufkanals 17 gegenüber der Innenwand 9 abgedichtet. Beim Verschwenken des Aufnahmeteils 10 kann somit auch kein Trinkwasser aus dem Zulaufkanal 16 und Rücklaufkanal 17 herausfließen oder tropfen, so dass die Fläche unterhalb der Filtervorrichtung 1 stets trocken bleibt.

Bei der in Figur 4 gezeigten Draufsicht sind beide, seitlich versetzt angeordneten Anschlussöffnungen 4, 4a für den Zulauf sowie den Rücklauf dargestellt. Jede ist jeweils mit einer Dichtung 6, 6a versehen und jeweils darunter befindet sich die zweite Dichtung 7, 7a, welche den Zulaufkanal 16 bzw. den Rücklaufkanal 17 in der Wechselposition gegen die Innenwand 9 verschließt.

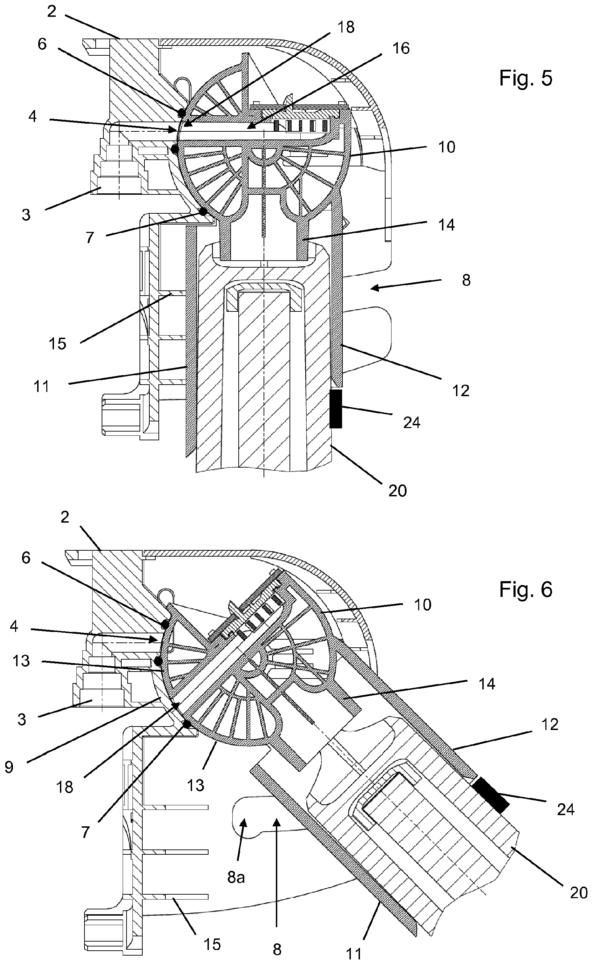

In den Figuren 5 und 6 ist jeweils ein Schnitt durch die Filtervorrichtung 1 in der Arbeitsposition A (Figur 5) und in der Wechselposition B (Figur 6) dargestellt. Die Schnittebene verläuft hierbei durch die Anschlussöffnungen 4, so dass der Zulaufkanal 16 zu erkennen ist. In der Arbeitsposition A sind der Anschluss 3 für den Zu- und Rücklauf des Trinkwassers über die Anschlussöffnung 4 und den Zulaufkanal 16 und Rücklaufkanal 17 fluidisch mit der Filterkartusche 20 verbunden. Die Dichtung 6 dichtet hierbei den Übergang zwischen Anschlussöffnung 4 und den Mündungen 18 des Zulaufkanals 16 und Rücklaufkanals 17 ab. Die Filterkartusche 20 sitzt in einer Filteraufnahme 14 im Aufnahmeteil 10 und ist beidseitig von den Führungsschienen 11, 12 umgeben. Die Führungsschiene 11 liegt in der Arbeitsposition A an Anschlagelementen 15 an, so dass die Mündungen 18 des Zulaufkanals 16 und Rücklaufkanals 17 in gleicher Höhe mit den Anschlussöffnungen 4 sind. Die Innenwand 9 der Anschlussvorrichtung 2 sowie die Wandung 13 des Aufnahmeteils sind koaxial zueinander ausgebildet, so dass bei einer Bewegung des Aufnahmeteils 10 die Wandung 13 an der Innenwand 9 entlanggleitet. Bevorzugt weisen die Wandung 13 und die Innenwand 9 jeweils zumindest abschnittsweise eine zylinderförmige Form auf.

In der Wechselposition B, welche in Figur 5 dargestellt ist, ist die fluidische Verbindung zwischen der Anschlussöffnung 4 und dem Zulaufkanal 16 und Rücklaufkanal 17 unterbrochen. Die Anschlussöffnung 4 wird über die Wandung 13 des Aufnahmeteils und der ersten Dichtung 6 abgedichtet, so dass kein Wasser bei weiterhin bestehendem Wasserdruck herausfließen kann. Eine Trennung der Wasserzufuhr durch Scheiber oder Ventile ist daher nicht notwendig. Neben der Abdichtung der Anschlussöffnungen 4 sind in der Wechselposition auch die Mündungen 18 des Zulauf- und Rücklaufkanals 16, 17 gegenüber der Innenwand 9 mittels der Dichtung 7 abgedichtet. So kann auch hier kann Wasser entweichen. Mit der Bewegung des Aufnahmeteils 10 aus der Arbeitsposition A in die Wechselposition B wird die Filterkartusche 20 aus der Filteraufnahme 14 herausgedrückt, so dass diese leichter zu entnehmen ist. Nach Einsetzen einer neuen Filterkartusche 20 wird diese, unterstützt durch das Eingreifen und die Bewegung des Führungselements 22 in der Führungsbahn 8, in die Filteraufnahme 14 eingezogen. Durch diese neben der Schwenkbewegung zusätzliche axiale in die Filteraufnahme 14 hinein wird die Filterkartusche 20 in der Filteraufnahme 14 abgedichtet.

An der Filterkartusche 20 können zudem noch Sicherungselemente 24 angeordnet sein, welche eine Bewegung der Filterkartusche 20 in der Arbeitsposition unterbinden. Insbesondere kann durch die Sicherungselemente 24 ein Drehen der Filterkartusche 20 unterbunden werden. Insbesondere bei Filterkartuschen 20, die in einem separaten, wiederverwendbaren Filtergehäuse mit aufgeschraubtem Filterkopf aufgenommen sind, wird so ein unbeabsichtigtes Aufdrehen des Gehäuses der Filterkartusche 20 um dessen Längsachse unterbunden.

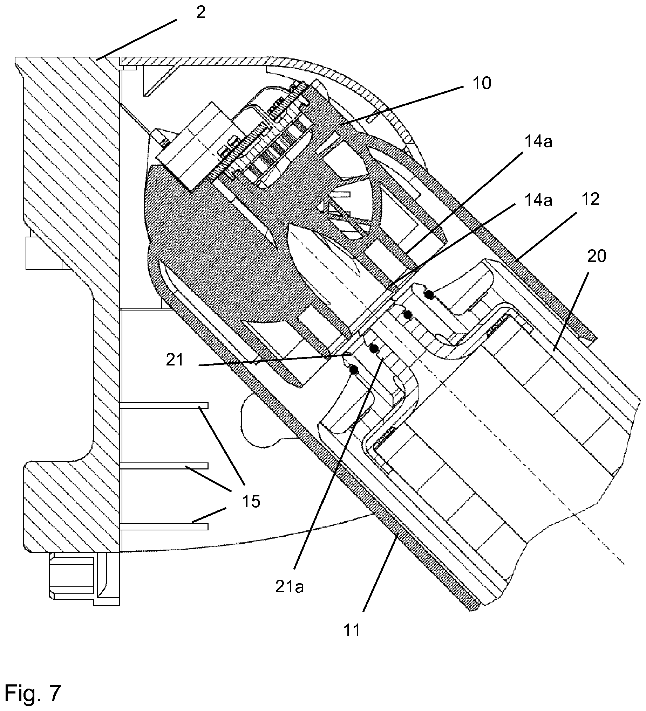

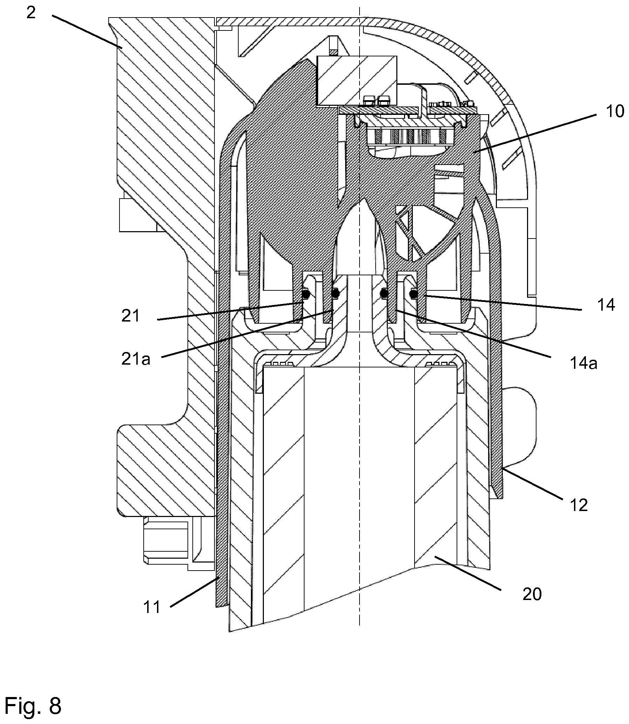

In den Figuren 7 und 8 sind ebenfalls Schnitte durch die Filtervorrichtung 1 in der Arbeitsposition A (Figur 7) und in der Wechselposition B (Figur 8) gezeigt. Die Schnittebene verläuft hierbei jedoch entlang der Mittellinie der Anschlussvorrichtung 2, so dass die Details der Ankopplung zwischen Filterkartusche 20 und dem Aufnahmeteil 10 zu erkennen sind. Diese erfolgt einerseits über den am Aufnahmeteil 10 angeordneten Filteranschluss 14, anderseits über einen passend geformten Anschlussstutzen 21 an der Filterkartusche 20.

Durch die Formgebung der Führungsbahn 8 befindet sich die Filterkartusche 20 und deren Anschlussstutzen 21 in der in Figur 7 gezeigten Wechselposition ein Stück von dem Filteranschluss 14 im Anschlussteil 10 entfernt und ist noch nicht mit diesem fluidisch verbunden. Beim Verschwenken des Aufnahmeteils 10 in die in Figur 8 gezeigte Arbeitsposition wird die Filterkartusche 20 wie bereits erläutert gegen den Filteranschluss 14 verschoben, so dass der Anschlussstutzen 21 dichtend in den Filteranschluss 14 eingeschoben wird. Hierbei entsteht eine fluiddichte Verbindung einerseits zwischen dem Zulaufkanal 16 über einen äußeren Ringbereich des Filteranschlusses 14 zu einem äußeren, ebenfalls als Ringraum ausgebildeten Bereich des Anschlussstutzens 21 und anderseits von dem Rücklaufkanal 17 über einen Innenbereich 14a des Filteranschlusses 14 zu einem inneren Bereich 21a des Anschlussstutzens 21. Wasser durchströmt somit die filteraktiven Schichten der zylindrischen Filterkartusche von außen nach innen. Sowohl im zulaufseitigen Anschlussbereich, dem Ringraum des Anschlussstutzens 21, als auch im rücklaufseitigen Anschlussbereich, dem Innenbereich 21a des Anschlussstutzens 21, ist jeweils eine separate Dichtung vorgesehen.

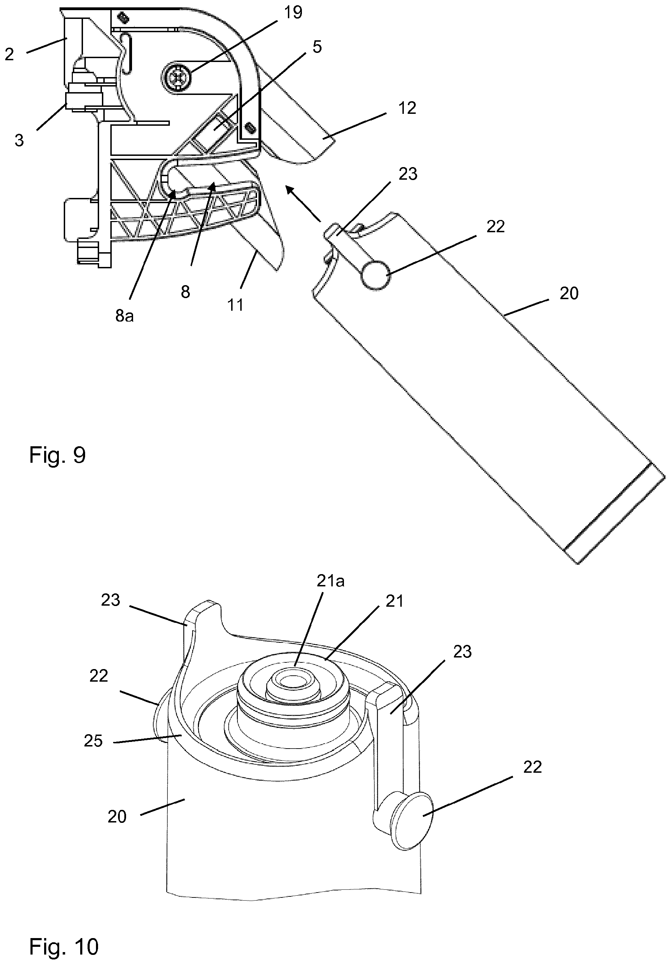

In Figur 9 ist das Einführen einer Filterkartusche 20 in die Anschlussvorrichtung 2 gezeigt. Die Anschlussvorrichtung 2 befindet sich in der Wechselposition und ist beiderseits durch die Verriegelungselemente 5 arretiert. Die Filterkartusche wird in longitudinaler Richtung, wie durch den Pfeil angedeutet, entlang der Führungsschienen 11, 12 eingeführt. Dabei dringen die beiden seitlich am Kopf der Filterkartusche angeordneten Eingreifelementen 23 in den Spalt zwischen Anschlussvorrichtung 2 und Aufnahmeteil 10 und drängen die Verriegelungselement 5 zurück, so dass sich das Aufnahmeteil 10 innerhalb der Anschlussvorrichtung 2 um die Schwenkachse 19 drehen lässt. Die Filterkartusche 20 kann nun zusammen mit dem Aufnahmeteil 10 in die in Figur 1 gezeigte Arbeitsposition geschwenkt werden, wobei die seitlichen Führungselemente 22 in die Führungsbahn 8 eingreifen und die Filterkartusche 20 gegen den in dem Aufnahmeteil 10 ausgebildeten Filteranschluss 14 führen. In der Vertiefung 8a der Führungsbahn 8 rastet das Führungselement 22 schließlich in der Endlage ein - die Filterkartusche ist in der Anschlussvorrichtung verriegelt und mit Zu- und Ableitung verbunden.

In Figur 10 ist schließlich der obere Bereich der Filterkartusche 20 mit dem Anschlussstutzen 21 vergrößert dargestellt. Durch den äußeren, ringförmigen Bereich des Anschlussstutzens 21 tritt zu filterndes Wasser in das Gehäuse der Filterkartusche ein, durchdringt die im Filter befindlichen filteraktiven Schichten und tritt zu dem inneren Bereich 21a des Anschlussstutzens 21 wieder aus. Beiderseits der Filterkartusche sind die Führungselemente 22 in Form je eines Pilzzapfens angeordnet, sowie die Eingreifelemente 23 in Form je einer nach oben weisenden Zunge, mit denen die Verriegelungselemente 5 beim Einsetzen der Filterkartusche 20 entriegelt werden. Außerdem ist in der Figur zu erkennen, dass der Außenrand 25 des Gehäuses der Filterkartusche 20 nach oben gezogen ist, so dass dieser um den Anschlussstutzen 21 eine Art Topf bildet. Dieser dient als Auffangreservoir für etwaiges beim Herausnehmen bzw. Auswechseln der Filterkartusche austretendes Restwasser.

## Patentansprüche

1. Filtervorrichtung (1) zur Trinkwasserfilterung, mit einer Anschlussvorrichtung (2), an der ein Aufnahmeteil (10) zum Anschluss einer Filterkartusche (20) schwenkbar gelagert ist,
wobei das Aufnahmeteil (10) eine zumindest abschnittsweise rotationssymmetrisch geformte Wandung (13) aufweist, welche eine konvexe Gleitfläche bildet, an der zu einem in dem Aufnahmeteil (10) ausgebildeten Filteranschluss (14) führende Zulauf- und Rücklaufkanäle (16, 17) für das zu filternde Trinkwasser münden,
wobei die Wandung (13) gegen eine zumindest abschnittsweise zu dieser koaxial gekrümmten Innenwand (9) der Anschlussvorrichtung (2) dichtend anliegt und an der Innenwand (9) Anschlussöffnungen (4) für einen Zulauf und Rücklauf des zu filternden Trinkwassers münden, und
wobei das Aufnahmeteil (10) in eine Arbeitsposition (A), in welcher die Mündungen (18) der Zulauf- und Rücklaufkanäle (16, 17) dichtend über den zugehörigen Anschlussöffnungen (4) in der Innenwand (9) der Anschlussvorrichtung (2) liegen, schwenkbar ist sowie in eine Wechselposition (B), in welcher die Filterkartusche (20) von dem Aufnahmeteil (10) abnehmbar bzw. in eine Anschlussöffnung des Filteranschlusses (14) im Aufnahmeteil (10) einführbar ist und die Wandung (13) des Aufnahmeteils (10) zumindest die Anschlussöffnung (4) für den Zulauf des zu filternden Trinkwasser dichtend verschließt.

2. Filtervorrichtung (1) nach Anspruch 1, bei der die Filterkartusche (20) bei einer Schwenkbewegung des Aufnahmeteils (10) von der Wechselposition (B) in die Arbeitsposition (A) eine Bewegung in Einführrichtung in den Filteranschluss (14) im Aufnahmeteil (10) hinein ausführt.

3. Filtervorrichtung (1) nach einem der vorhergehenden Ansprüche, bei der an der Anschlussvorrichtung (2) seitlich von dem Aufnahmeteil (10) zumindest eine Führungsbahn (8) derart ausgebildet ist, dass ein an der Filterkartusche (20) angeordnetes Führungselement (22) bei der Bewegung des Aufnahmeteils (10) von der Wechselposition (B) in die Arbeitsposition (A) in die Führungsbahn (8) eingreift.

4. Filtervorrichtung (1) nach Anspruch 3, bei der die Führungsbahn (8) derart ausgestaltet ist, dass die Filterkartusche (20) bei der einer Schwenkbewegung des Aufnahmeteils (10) von der Wechselposition (B) in die Arbeitsposition (A) eine Einzugsbewegung in das Aufnahmeteil (10) hinein ausführt.

5. Filtervorrichtung (1) nach einem der vorhergehenden Ansprüche, bei der beiderseits des Aufnahmeteils (10) jeweils eine Führungsbahn (8) in der Anschlussvorrichtung (2) ausgebildet ist.

6. Filtervorrichtung (1) nach einem der Ansprüche 3 bis 5, bei der die Führungsbahn (8) im Bereich einer Endlage eine Vertiefung (8a) aufweist, in welcher das Führungselement (22) in der Endlage einrastet.

7. Filtervorrichtung (1) nach einem der vorhergehenden Ansprüche, bei der das Aufnahmeteil (10) zumindest eine, vorzugsweise abnehmbare Führungsschiene (11, 12) umfasst zur Unterstützung der Filterkartusche (20) in Einführrichtung.

8. Filtervorrichtung (1) nach einem der vorhergehenden Ansprüche, bei der die Wandung (13) als eine Zylinderfläche oder Kugelfläche ausgebildet ist.

9. Filtervorrichtung (1) nach einem der vorhergehenden Ansprüche, bei der an der Anschlussvorrichtung (2) zumindest ein Verriegelungselement (5) angeordnet ist, welches in der Wechselposition (B) eine Schwenkbewegung des Aufnahmeteils (10) blockiert und welches durch zumindest ein Eingreifelement (23) an der Filterkartusche (20) beim Einsetzen der Filterkartusche (20) lösbar ist.

10. Filtervorrichtung (1) nach Anspruch 8, bei der beiderseits des Aufnahmeteils (10) zumindest ein Verriegelungselement (5) an der Anschlussvorrichtung (2) oder dem Aufnahmeteil angeordnet ist.

11. Filtervorrichtung (1) nach Anspruch 9, bei der die Verriegelungselemente (5) vorzugsweise in der Höhe und/oder Tiefe versetzt zueinander angeordnet sind oder unterschiedlich in Ihrer Form ausgebildet sind.

12. Filtervorrichtung (1) nach einem der vorhergehenden Ansprüche, bei der das Aufnahmeteil (10) von der Arbeitsposition (A) in die Wechselposition (B) um einen Winkel kleiner 90°, vorzugsweise um einen Winkel zwischen 30° und 60°, besonders bevorzugt zwischen 45° und 60°, schwenkbar ist.

13. Filtervorrichtung (1) nach einem der vorhergehenden Ansprüche, bei der an der Innenwand (9) um die Anschlussöffnungen (4) herum zumindest eine erste Dichtung (6) angeordnet ist, welche die Anschlussöffnungen (4) gegenüber der Wandung (13) abdichtet.

14. Filtervorrichtung (1) nach einem der vorhergehenden Ansprüche, bei der an der Innenwand (9) zumindest eine zweite Dichtung (7) angeordnet ist, welche bei der Schwenkbewegung des Aufnahmeteils (10) außerhalb der Arbeitsposition (A) die Mündungen (18) des Zulauf- und Rücklaufkanals (16, 17) gegenüber der Innenwand (9) abdichtet.

15. Filtervorrichtung (1) nach einem der vorhergehenden Ansprüche, bei der an der Filterkartusche (20) zumindest ein Sicherungselement (24) zur Sicherung der Filterkartusche (20) in der Arbeitsposition (A) gegen ein Verdrehen der Filterkartusche (20) um deren Längsachse angeordnet ist.

## Claims

1. A filter device (1) for filtering drinking water, comprising a connection device (2) on which a receiving part (10) for connection of a filter cartridge (20) is pivotably mounted,
wherein the receiving part (10) has a wall (13) which is at least sectionally of rotationally symmetrical form and which forms a convex sliding surface at which inflow and return channels (16, 17) for the drinking water to be filtered open out, the inflow and return channels leading to a filter connection (14) formed in the receiving part (10),
wherein the wall (13) bears sealingly against an inner wall (9), curved coaxially with respect thereto at least sectionally, of the connection device (2), and connection openings (4) for an inflow and return of the drinking water to be filtered open out at the inner wall (9), and
wherein the receiving part (10) can be pivoted into a working position (A), in which the mouths (18) of the inflow and return channels (16, 17) lie sealingly over the associated connection openings (4) in the inner wall (9) of the connection device (2), and into a changeover position (B), in which the filter cartridge (20) can be removed from the receiving part (10) or can be inserted into a connection opening of the filter connection (14) in the receiving part (10) and the wall (13) of the receiving part (10) sealingly closes off at least the connection opening (4) for the inflow of the drinking water to be filtered.

2. The filter device (1) as claimed in claim 1, in which, during a pivoting movement of the receiving part (10) from the changeover position (B) into the working position (A), the filter cartridge (20) performs a movement into the filter connection (14) in the receiving part (10) in the insertion direction.

3. The filter device (1) as claimed in either of the preceding claims, in which at least one guideway (8) is formed in the connection device (2) laterally with respect to the receiving part (10) in such a way that, during the movement of the receiving part (10) from the changeover position (B) into the working position (A), a guide element (22) arranged on the filter cartridge (20) engages into the guideway (8).

4. The filter device (1) as claimed in claim 3, in which the guideway (8) is formed in such a way that, during a pivoting movement of the receiving part (10) from the changeover position (B) into the working position (A), the filter cartridge (20) performs a pulling-in movement into the receiving part (10).

5. The filter device (1) as claimed in one of the preceding claims, in which, on both sides of the receiving part (10), in each case one guideway (8) is formed in the connection device (2).

6. The filter device (1) as claimed in one of claims 3 to 5, in which, in the region of an end position, the guideway (8) has a depression (8a) in which the guide element (22) latches in the end position.

7. The filter device (1) as claimed in one of the preceding claims, in which the receiving part (10) comprises at least one, preferably removable, guide rail (11, 12) for supporting the filter cartridge (20) in the insertion direction.

8. The filter device (1) as claimed in one of the preceding claims, in which the wall (13) is in the form of a cylindrical surface or spherical surface.

9. The filter device (1) as claimed in one of the preceding claims, in which, on the connection device (2), there is arranged at least one locking element (5), which, in the changeover position (B), blocks a pivoting movement of the receiving part (10) and which, by way of at least one engagement element (23) on the filter cartridge (20), can be released during insertion of the filter cartridge (20).

10. The filter device (1) as claimed in claim 8, in which, on both sides of the receiving part (10), at least one locking element (5) is arranged on the connection device (2) or the receiving part.

11. The filter device (1) as claimed in claim 9, in which the locking elements (5) are arranged preferably offset in height and/or depth with respect to one another or differ in terms of their form.

12. The filter device (1) as claimed in one of the preceding claims, in which the receiving part (10) can be pivoted from the working position (A) into the changeover position (B) through an angle of less than 90°, preferably through an angle of between 30° and 60°, particularly preferably of between 45° and 60°.

13. The filter device (1) as claimed in one of the preceding claims, in which at least one first seal (6) is arranged on the inner wall (9) around the connection openings (4) and seals off the connection openings (4) with respect to the wall (13).

14. The filter device (1) as claimed in one of the preceding claims, in which at least one second seal (7) is arranged on the inner wall (9) and seals off the mouths (18) of the inflow and return channels (16, 17) with respect to the inner wall (9) during the pivoting movement of the receiving part (10) outside the working position (A).

15. The filter device (1) as claimed in one of the preceding claims, in which, on the filter cartridge (20), there is arranged at least one securing element (24) for securing the filter cartridge (20) in the working position (A) against rotation of the filter cartridge (20) about the longitudinal axis thereof.

## Revendications

1. Dispositif de filtration (1) pour la filtration d'eau potable, avec un dispositif de raccordement (2) sur lequel une partie de réception (10) est montée de manière pivotante pour le raccordement d'une cartouche de filtration (20),
la partie de réception (10) présentant une paroi (13) de forme au moins par sections symétrique en rotation, qui forme une surface de glissement convexe, sur laquelle débouchent des canaux d'arrivée et de retour (16, 17) pour l'eau potable à filtrer, conduisant à un raccord de filtre (14) réalisé dans la partie de réception (10),
la paroi (13) étant appliquée de manière étanche contre une paroi intérieure (9) du dispositif de raccordement (2) qui est courbée au moins par sections coaxialement à celle-ci, et des ouvertures de raccordement (4) pour une arrivée et un retour de l'eau potable à filtrer débouchant sur la paroi intérieure (9), et
la partie de réception (10) pouvant être pivotée dans une position de travail (A), dans laquelle les embouchures (18) des canaux d'arrivée et de retour (16, 17) sont situées de manière étanche au-dessus des ouvertures de raccordement (4) correspondantes dans la paroi intérieure (9) du dispositif de raccordement (2), ainsi que dans une position de changement (B), dans laquelle la cartouche de filtration (20) peut être retirée de la partie de réception (10) ou peut être insérée dans une ouverture de raccordement du raccord de filtre (14) dans la partie de réception (10), et la paroi (13) de la partie de réception (10) fermant de manière étanche au moins l'ouverture de raccordement (4) pour l'arrivée de l'eau potable à filtrer.

2. Dispositif de filtration (1) selon la revendication 1, dans lequel la cartouche de filtration (20), lors d'un mouvement de pivotement de la partie de réception (10) de la position de changement (B) à la position de travail (A), effectue un mouvement dans la direction d'insertion dans le raccord de filtre (14) dans la partie de réception (10).

3. Dispositif de filtration (1) selon l'une quelconque des revendications précédentes, dans lequel au moins une piste de guidage (8) est réalisée sur le dispositif de raccordement (2) latéralement à la partie de réception (10) de telle sorte qu'un élément de guidage (22) agencé sur la cartouche de filtration (20) s'engage dans la piste de guidage (8) lors du déplacement de la partie de réception (10) de la position de changement (B) à la position de travail (A).

4. Dispositif de filtration (1) selon la revendication 3, dans lequel la piste de guidage (8) est conçue de telle sorte que la cartouche de filtration (20) effectue un mouvement de chargement dans la partie de réception (10) lors d'un mouvement de pivotement de la partie de réception (10) de la position de changement (B) à la position de travail (A).

5. Dispositif de filtration (1) selon l'une quelconque des revendications précédentes, dans lequel une piste de guidage (8) est réalisée dans le dispositif de raccordement (2) des deux côtés de la partie de réception (10).

6. Dispositif de filtration (1) selon l'une quelconque des revendications 3 à 5, dans lequel la piste de guidage (8) présente, dans la zone d'une position d'extrémité, un renfoncement (8a) dans lequel l'élément de guidage (22) s'enclenche dans la position d'extrémité.

7. Dispositif de filtration (1) selon l'une quelconque des revendications précédentes, dans lequel la partie de réception (10) comprend au moins un rail de guidage (11, 12), de préférence amovible, pour supporter la cartouche de filtration (20) dans la direction d'insertion.

8. Dispositif de filtration (1) selon l'une quelconque des revendications précédentes, dans lequel la paroi (13) est réalisée sous la forme d'une surface cylindrique ou d'une surface sphérique.

9. Dispositif de filtration (1) selon l'une quelconque des revendications précédentes, dans lequel au moins un élément de verrouillage (5) est agencé sur le dispositif de raccordement (2), qui bloque un mouvement de pivotement de la partie de réception (10) dans la position de changement (B) et qui peut être libéré par au moins un élément d'engagement (23) sur la cartouche de filtration (20) lors de l'introduction de la cartouche de filtration (20).

10. Dispositif de filtration (1) selon la revendication 8, dans lequel au moins un élément de verrouillage (5) est agencé des deux côtés de la partie de réception (10) sur le dispositif de raccordement (2) ou la partie de réception.

11. Dispositif de filtration (1) selon la revendication 9, dans lequel les éléments de verrouillage (5) sont de préférence agencés en décalage en hauteur et/ou en profondeur les uns par rapport aux autres ou sont réalisés avec une forme différente.

12. Dispositif de filtration (1) selon l'une quelconque des revendications précédentes, dans lequel la partie de réception (10) peut pivoter de la position de travail (A) à la position de changement (B) d'un angle inférieur à 90°, de préférence d'un angle compris entre 30° et 60°, de manière particulièrement préférée entre 45° et 60°.

13. Dispositif de filtration (1) selon l'une quelconque des revendications précédentes, dans lequel au moins un premier joint d'étanchéité (6) est agencé sur la paroi intérieure (9) autour des ouvertures de raccordement (4), lequel assure l'étanchéité des ouvertures de raccordement (4) par rapport à la paroi (13).

14. Dispositif de filtration (1) selon l'une quelconque des revendications précédentes, dans lequel au moins un deuxième joint d'étanchéité (7) est agencé sur la paroi intérieure (9), lequel assure l'étanchéité des embouchures (18) des canaux d'arrivée et de retour (16, 17) par rapport à la paroi intérieure (9) lors du mouvement de pivotement de la partie de réception (10) hors de la position de travail (A).

15. Dispositif de filtration (1) selon l'une quelconque des revendications précédentes, dans lequel au moins un élément d'assujettissement (24) est agencé sur la cartouche de filtration (20) pour assujettir la cartouche de filtration (20) dans la position de travail (A) contre une rotation de la cartouche de filtration (20) autour de son axe longitudinal.
